# EUROPEAN PATENT APPLICATION

(11) **EP 4 517 310 A1**
(43) Date of publication of application: **05.03.2025**
(21) Application number: 23884575.4
(22) Date of filing: 12.10.2023
(51) Int. Cl.: G01N 21/95, G01B 11/30

(54) **TAB DETECTION SYSTEM AND TAB DETECTION METHOD**

(30) Priority: 03.11.2022 CN 202211373754
(71) Applicant: Contemporary Amperex Technology Co., Limited, Ningde, Fujian 352100 (CN)
(72) Inventor: LI, Hongyuan, Ningde, Fujian 352100 (CN); WU, Chunxu, Ningde, Fujian 352100 (CN); JIANG, Ping, Ningde, Fujian 352100 (CN); MAO, Yuyang, Ningde, Fujian 352100 (CN)
(74) Representative: Ziebig Hengelhaupt Intellectual Property Attorneys Patentanwaltskanzlei PartGmbB
(86) International application number: PCT/CN2023/124360
(87) International publication number: WO 2024/093643

(57) **Abstract**

The present application relates to a tab detection system and a tab detection method. The system includes an image acquisition module and an upper-level controller. The image acquisition module is configured to acquire an image of a tab of a battery cell rolled by a die cutting module, where the image acquisition module is located between the die cutting module and a lamination module. The upper-level controller is configured to determine whether the tab has a defect based on the image of the tab.

## Description

### CROSS-REFERENCE TO RELATED APPLICATIONS

The present application claims priority to Chinese Patent Application No. 202211373754.2, filed with the China National Intellectual Property Administration on November 3, 2022 and entitled "TAB DETECTION SYSTEM AND TAB DETECTION METHOD", which is incorporated herein by reference in its entirety.

### TECHNICAL FIELD

The present application relates to the technical field of battery production, and in particular, to a tab detection system and a tab detection method.

### BACKGROUND

In a battery production process, tabs are formed through a die cutting process. The tabs are easily folded during die cutting, lamination/winding and transferring, tab folding is unlikely to be detected and identified after a battery cell is formed, and the tab folding causes situations such as short circuits and lithium precipitation, posing serious safety hazards.

At present, tab folding is detected through a solution of using a photoelectric sensor for irradiation detection. During use, the photoelectric sensor is installed at one end in a width direction of an electrode plate, and is configured to irradiate a part of a tab connected to the electrode plate in a direction forming an angle with a plane where the electrode plate is located, and detect a color of an irradiated region. Thus, the photoelectric sensor is used to irradiate the part of the tab connected to the electrode plate and detect the color of the irradiated region, so that whether the tab is folded is determined based on the color obtained through the detection.

It can be learned that photoelectric sensors can only detect the presence of a tab but cannot measure a folding area of the tab. In addition, the principle of photoelectric sensors is to implement detection by converting a light intensity change into an electric signal change, which is easily interfered by light and causes missed detection.

### SUMMARY

In view of the above problems, the present application provides a tab detection system and a tab detection method, which can solve the problem that whether a tab is folded cannot be accurately detected in a conventional technology.

### Technical Solution

A technical solution disclosed in an embodiment of the present application is as follows:

According to a first aspect, the present application provides a tab detection system, including an image acquisition module and an upper-level controller. The image acquisition module is configured to acquire an image of a tab of a battery cell rolled by a die cutting module, where the image acquisition module is located between the die cutting module and a lamination module. The upper-level controller is configured to determine whether the tab has a defect based on the image of the tab.

In some embodiments, the system further includes a position sensor. The position sensor is configured to generate an image acquisition instruction and send the image acquisition instruction to the image acquisition module after detecting that the tab has reached a preset feeding position, where the preset feeding position is located between the die cutting module and the lamination module.

The image acquisition module acquires the image of the tab after receiving the image acquisition instruction, to obtain the image of the tab and send the image to the upper-level controller.

In some embodiments, two image acquisition modules are provided, and the two image acquisition modules are respectively located at an end portion of the battery cell at which an anode tab is arranged and an end portion of the battery cell at which a cathode tab is arranged.

The two image acquisition modules are respectively configured to synchronously acquire an anode tab image and a cathode tab image after receiving the image acquisition instruction.

In some embodiments, the system further includes at least one backlight source, where the at least one backlight source is located at the preset feeding position, and the backlight source and the image acquisition module are arranged opposite to each other at two sides of the battery cell.

The at least one backlight source is configured to expose the tab along a direction from the tab to the image acquisition module while the image acquisition module is acquiring the image of the tab.

In some embodiments, the system further includes at least one front light source, where the at least one front light source is located at the preset feeding position, and the front light source and the image acquisition module are arranged at a same side of the battery cell.

The at least one front light source is configured to expose the tab along a direction from the image acquisition module to the tab while the image acquisition module is acquiring the image of the tab.

In some embodiments, the system further includes at least one backlight source and at least one front light source, where the at least one backlight source and the at least one front light source are located at the preset feeding position, the at least one front light source and the image acquisition module are arranged at a same side of the battery cell, and the at least one backlight source and the image acquisition module are arranged opposite to each other at two sides of the battery cell.

The at least one backlight source and the at least one front light source are configured to respectively expose the tab at two sides of the battery cell while the image acquisition module is acquiring the image of the tab.

In some embodiments, the upper-level controller is configured to identify an anode tab region and a cathode tab region in the image of the tab under a condition that the image of the tab has been acquired, and determine whether the anode tab and the cathode tab are folded and/or whether there is a residual material based on a comparison result between the anode tab region and a preset anode tab parameter as well as a comparison result between the cathode tab region and a preset cathode tab parameter.

In some embodiments, the preset anode tab parameter includes a preset anode tab area; and the upper-level controller is further configured to identify the anode tab image to obtain the anode tab region, obtain the anode tab area based on a gray value difference between the anode tab region and a background image of the anode tab image, and determine whether the anode tab is folded based on whether the anode tab area is less than the preset anode tab area.

In some embodiments, the preset cathode tab parameter includes a preset cathode tab area; and the upper-level controller is further configured to identify the cathode tab image to obtain the cathode tab region, obtain the cathode tab area based on a gray value difference between the cathode tab region and a background image of the cathode tab image, and determine whether the cathode tab is folded based on whether the cathode tab area is less than the preset cathode tab area.

In some embodiments, the preset anode tab parameter includes a preset anode tab residual material area; and the upper-level controller is further configured to obtain an anode tab residual material region based on the anode tab region and the anode tab image, obtain an anode tab residual material area based on a gray value difference between the anode tab residual material region and a background image of the anode tab image, and determine whether there is a residual material on the anode tab based on whether the anode tab residual material area is less than the preset anode tab residual material area.

In some embodiments, the preset cathode tab parameter includes a preset cathode tab residual material area; and the upper-level controller is further configured to obtain a cathode tab residual material region based on the cathode tab region and the cathode tab image, obtain a cathode tab residual material area based on a gray value difference between the cathode tab residual material region and a background image of the cathode tab image, and determine whether there is a residual material on the cathode tab based on whether the cathode tab residual material area is less than the preset cathode tab residual material area.

In some embodiments, the system further includes a lower-level controller.

The upper-level controller is further configured to send a defect detection result of the tab to the lower-level controller; and

the lower-level controller is configured to generate a discarding instruction or a lamination instruction for the battery cell based on the defect detection result under a condition that the defect detection result has been received.

In some embodiments, the system further includes a discarding module.

The upper-level controller is configured to determine that the tab is folded when a tab image area is less than a preset tab area, and/or determine that there is a residual material on the tab under a condition that a tab residual material area is greater than or equal to a preset tab residual material area, and send a detection result that the tab is folded and/or there is a residual material on the tab to the lower-level controller.

The lower-level controller is configured to generate a discarding instruction and send the discarding instruction to the discarding module after receiving the result that the tab is folded and/or there is a residual material on the tab.

The discarding module is configured to discard the battery cell after receiving the discarding instruction.

In some embodiments, the upper-level controller is configured to determine that the tab is not folded when a tab area is greater than or equal to a preset tab area, and/or determine that there is no residual material on the tab under a condition that a tab residual material area is less than a preset tab residual material area, and send a detection result that the tab is not folded and/or there is no residual material on the tab to the lower-level controller.

The lower-level controller is configured to generate a lamination instruction and send the lamination instruction to the lamination module after receiving the result that the tab is not folded and/or there is no residual material on the tab.

The lamination module is configured to implement a lamination treatment for the battery cell after receiving the lamination instruction.

According to a second aspect, the present application further provides a tab detection method, including:
acquiring an image of a tab of a rolled battery cell;
identifying the image of the tab to obtain a tab region in the image of the tab; and
determining whether the tab has a defect based on a comparison result between the tab region and a preset tab parameter.

In some embodiments, the image of the tab includes an anode tab image and a cathode tab image, and the tab region includes an anode tab region and a cathode tab region; where the identifying the image of the tab to obtain a tab region in the image of the tab includes:
acquiring a preset anode tab image contour and a preset cathode tab image contour;
locating the anode tab image by using the preset anode tab image contour to obtain the anode tab region; and
locating the cathode tab image by using the preset cathode tab image contour to obtain the cathode tab region.

In some embodiments, the preset anode tab parameter includes a preset anode tab area, and the preset cathode tab parameter includes a preset cathode tab area; where the determining whether the tab has a defect based on a comparison result between the tab region and a preset tab parameter includes:
obtaining the anode tab area based on a gray value difference between the anode tab region and a background image of the anode tab image;
determining whether the anode tab is folded based on whether the anode tab area is less than the preset anode tab area; and/or
obtaining the cathode tab area based on a gray value difference between the cathode tab region and a background image of the cathode tab image; and
determining whether the cathode tab is folded based on whether the cathode tab area is less than the preset cathode tab area.

In some embodiments, the preset anode tab parameter includes a preset anode tab residual material area; where the determining whether the tab has a defect based on the tab region and a preset tab parameter further includes:
obtaining the anode tab residual material region based on the preset anode tab image contour, the anode tab region and the anode tab image; and
determining whether there is a residual material on the anode tab based on whether an area of the anode tab residual material region is less than the preset anode tab residual material area.

In some embodiments, the preset cathode tab parameter includes a preset cathode tab residual material area; where the determining whether the tab has a defect based on a comparison result between the tab region and a preset tab parameter further includes:
obtaining the cathode tab residual material region based on the preset cathode tab image contour, the cathode tab region and the cathode tab image; and
determining whether there is a residual material on the cathode tab based on whether an area of the cathode tab residual material region is less than the preset cathode tab residual material area.

In some embodiments, the method further includes:
acquiring an identification code of the battery cell;
based on the identification code of the battery cell, determining a position and posture parameter of an image acquisition module used for acquiring the image of the tab of the battery cell, and determining a tab defect detection algorithm corresponding to the battery cell in a preset tab defect detection algorithm base.

### Beneficial Effect

The first aspect of the embodiments of the present application has the following beneficial effects: Tab defect detection is implemented after die cutting and rolling of the battery cell, and after the battery cell is subjected to the tab defect detection, the battery cell no longer passes through a rolling apparatus of the die cutting module, thereby effectively preventing the battery cell from being folded again during transfer after the tab defect detection is completed, and also ensuring the authenticity and reliability of the detection results.

It can be understood that the beneficial effects of the second aspect of the present application can refer to related description of the first aspect of the present application, which are not described again herein.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not construed as a limitation on the present application. In addition, throughout the accompanying drawings, the same reference signs represent the same components. In the accompanying drawings:
FIG. 1 is a schematic structural diagram of a tab detection system according to one embodiment of the present application;
FIG. 2 is a schematic structural side view of battery cell feeding according to one embodiment of the present application;
FIG. 3 is a schematic structural front view of battery cell feeding according to one embodiment of the present application;
FIG. 4 is a schematic structural diagram of a front light source according to one embodiment of the present application;
FIG. 5 is a schematic structural diagram of the front light source and a backlight source according to one embodiment of the present application;
FIG. 6 is a schematic flowchart of a tab detection method according to one embodiment of the present application;
FIG. 7 is a schematic flowchart of identifying an anode tab region and a cathode tab region according to one embodiment of the present application;
FIG. 8a is a schematic flowchart of detecting whether an anode tab is folded according to one embodiment of the present application;
FIG. 8b is a schematic flowchart of detecting whether a cathode tab is folded according to one embodiment of the present application;
FIG. 9a is a schematic flowchart of detecting whether there is a residual material on an anode tab according to one embodiment of the present application;
FIG. 9b is a schematic flowchart of detecting whether there is a residual material on a cathode tab according to one embodiment of the present application;
FIG. 10 is a schematic flowchart of detecting whether there is a residual material on an anode tab according to another embodiment of the present application;
FIG. 11 is a schematic flowchart of detecting whether there is a residual material on a cathode tab according to another embodiment of the present application; and
FIG. 12 is a schematic flowchart of determining a tab detection algorithm according to one embodiment of the present application.

### DETAILED DESCRIPTION OF EMBODIMENTS

Embodiments of the technical solution of the present application are described in detail below with reference to the accompanying drawings. The following embodiments are only used to more clearly illustrate the technical solution of the present application, and therefore, are merely examples and cannot be used to limit the protection scope of the present application.

Unless otherwise defined, all technical and scientific terms used herein bear the same meanings as what is normally understood by a person skilled in the technical field of the present application. The terms used herein are merely intended to describe specific embodiments but not to limit the present application. The term "include" and any variations thereof used in the specification, claims, and brief description of drawings of the present application are intended as non-exclusive inclusion.

In the description of the embodiments of the present application, the terms "first", "second", and the like are merely used to distinguish between different objects, but shall not be understood as any indication or implication of relative importance or any implicit indication of the number, particular sequence or primary-secondary relationship of the technical features indicated. In the description of the present application, "a plurality of" means more than two unless otherwise specifically defined.

Reference to "embodiments" in this specification means that particular features, structures, or characteristics described with reference to the embodiments may be included in at least one embodiment of the present application. Occurrence of the phrase in various places in this specification does not necessarily refer to the same embodiment, nor is an independent or alternative embodiment that is mutually exclusive with other embodiments. It is understood explicitly and implicitly by a person skilled in the art that the embodiments described in this specification may be combined with other embodiments.

Lithium-ion batteries (or lithium batteries for short) have been widely used in a variety of electric products due to their advantages such as high energy density, long cycle life and no memory effect. For example, the electric products may be, but are not limited to, mobile phones, tablet computers, laptop computers, electric toys, electric tools, electric bicycles, electric vehicles, ships, and spacecrafts.

Production processes of lithium-ion batteries include a winding process, a lamination process, and the like. Laminated batteries manufactured by using a lamination process have the characteristics of high discharge rate, low internal resistance, high capacity density and high energy density in comparison with wound batteries manufactured by using a winding process, so laminated batteries have gradually become mainstream power batteries.

In a battery production process, tabs are formed through a die cutting process. The tabs are easily folded during die cutting, lamination/winding and transferring, tab folding is unlikely to be detected and identified after a battery cell is formed, and the tab folding causes situations such as short circuits and lithium precipitation, posing serious safety hazards.

At present, tab folding is detected through a solution of using a photoelectric sensor for irradiation detection. During use, the photoelectric sensor is installed at one end in a width direction of an electrode plate, and is configured to irradiate a part of a tab connected to the electrode plate in a direction forming an angle with a plane where the electrode plate is located, and detect a color of an irradiated region. Thus, the photoelectric sensor is used to irradiate the part of the tab connected to the electrode plate and detect the color of the irradiated region, so that whether the tab is folded is determined based on the color obtained through the detection.

It can be learned that photoelectric sensors can only detect the presence of a tab but cannot measure a folding area of the tab. In addition, the principle of photoelectric sensors is to implement detection by converting a light intensity change into an electric signal change, which is easily interfered by light and causes missed detection.

In addition, when a tab folding defect is detected manually, there is a great uncertainty, which is prone to missed detection and mistaken operation.

In view of the above consideration, the applicant proposes a tab detection system and a tab detection method, where tab defect detection is implemented after die cutting and rolling of the battery cell, and after the battery cell is subjected to the tab defect detection, the battery cell no longer passes through a rolling apparatus of a die cutting module, thereby effectively preventing the battery cell from being folded again during transfer after the tab defect detection is completed, and also ensuring the authenticity and reliability of the detection results. In addition, the tab detection method can not only simultaneously detect the defects of tab folding and presence of a residual material, but also quantize a folding area and a residual material area so as to further adjust the process.

For ease of understanding, some words are described in the embodiments of the present application.

The batteries involved in the embodiments of the present application may include, but are not limited to, button batteries, laminated batteries, pouch batteries, hard-shell batteries and cylindrical batteries according to shape-based classification of the batteries.

The batteries involved in the embodiments of the present application may include, but are not limited to, ternary batteries, lithium iron phosphate batteries, silicon-based batteries, carbon and silicon-based batteries and lithium-sulfur batteries according to material-based classification of the batteries.

A cathode (or referred to as a positive electrode) of a battery involved in the embodiments of the present application is oxidized during charging, and lithium ions can deintercalate from a layer-like intercalation material of the cathode, pass through an electrolyte and intercalate into an anode. Correspondingly, an anode (or referred to as a negative electrode) of the battery involved in the embodiments of the present application has an oxidization reaction during discharging, and lithium ions can deintercalate from the anode, pass through the electrolyte and intercalate into the cathode again.

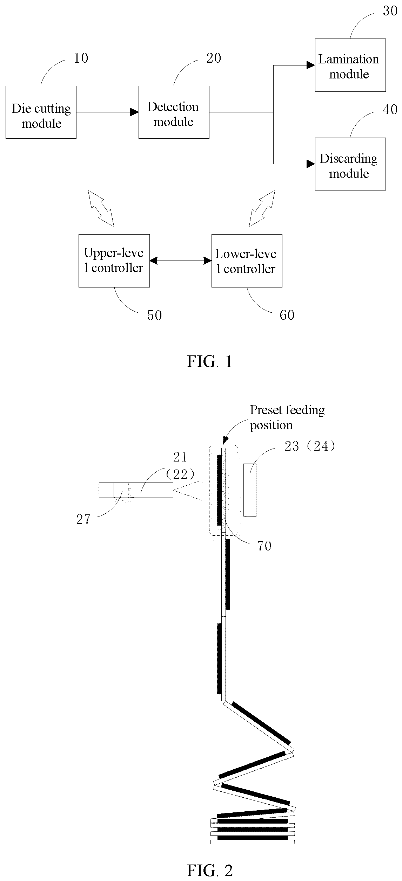

In one embodiment, FIG. 1 is a schematic structural diagram of a tab detection system according to one embodiment of the present application. As shown in FIG. 1, the tab detection system includes an image acquisition module 20 and an upper-level controller 50. The image acquisition module 20 is communicatively connected to the upper-level controller 50. The image acquisition module 20 is configured to acquire an image of a tab of a battery cell rolled by a die cutting module. The upper-level controller 50 is configured to determine whether the tab has a defect based on the image of the tab acquired by the image acquisition module 20.

In one embodiment, a die cutting module 10 is located at an upstream station of a detection module 20, and a lamination module 30 and a discarding module 40 are located at an upstream station of the detection module 20. It can be learned that the detection module 20 is located between the die cutting module 10 and the lamination module 30 in a battery cell production process. Tab defect detection is implemented after die cutting and rolling of the battery cell, and after the battery cell is subjected to the tab defect detection, the battery cell no longer passes through a rolling apparatus of the die cutting module, thereby effectively preventing the battery cell from being folded again during transfer after the tab defect detection is completed, and also ensuring the authenticity and reliability of the detection results.

In one embodiment, the tab detection system further includes a lower-level controller 60. The upper-level controller 50 is communicatively connected to the lower-level controller 60. The upper-level controller 50 is communicatively connected to the die cutting module 10, the detection module 20 and the lamination module 30, respectively. The lower-level controller 60 is communicatively connected to the die cutting module 10, the detection module 20, the lamination module 30 and the discarding module 40, respectively. After the battery cell die-cut and rolled by the die cutting module 10 reaches the detection module 20, when the detection module 20 detects that the battery cell has no defect, the lamination module 30 laminates the battery cell that has no defect, and when the detection module 20 detects that the battery cell has a defect, the discarding module 40 discards the battery cell that has a defect.

In addition, the die cutting module 10, the detection module 20, the lamination module 30 and the discarding module 40 may be arranged at a same laminating machine; and the die cutting module 10 may alternatively be arranged independent to a laminating machine including the detection module 20, the lamination module 30 and the discarding module 40. This is not limited herein, as long as the detection module 20 is located between the die cutting module 10 and the lamination module 30.

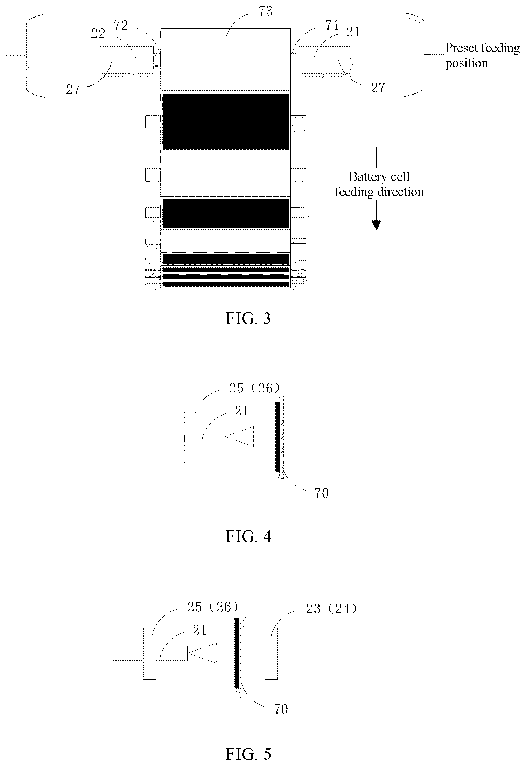

As shown in FIG. 2 and FIG. 3, the detection module 20 includes an image acquisition module 20 and a position sensor 27. The image acquisition module 20 is communicatively connected to the upper-level controller 50 and the lower-level controller 60, respectively. The position sensor 27 is communicatively connected to the image acquisition module 20. It can be learned from FIG. 1 that the detection module 20 is located between the die cutting module 10 and the lamination module 30, and the image acquisition module 20 and the position sensor 27 are located between the die cutting module 10 and the lamination module 30.

A battery cell 70 includes a plurality of laminated battery cells 73, as well as an anode tab 71 and a cathode tab 72 that respectively extend from two ends of each laminated battery cell 73. It can be learned that a tab includes the anode tab 71 and the cathode tab 72. A lamination manner of the plurality of battery cells 73 is not limited to a direct stacking-type lamination manner in which a separator is cut off, and also not limited to a Z-shaped folding-type lamination manner in which the separator is not cut off. In this embodiment, the Z-shaped lamination manner is used as an example for description.

Specifically, the position sensor 27 is configured to generate an image acquisition instruction and send the image acquisition instruction to the image acquisition module 20 after detecting that the tab has reached a preset feeding position. The image acquisition module 20 acquires the image of the tab after receiving the image acquisition instruction, to obtain the image of the tab of the battery cell 70 and send the image to the upper-level controller 50.

The preset feeding position is located between the die cutting module 10 and the lamination module 30. It can be learned that when each laminated battery cell 73 of the battery cell 70 is fed along a battery cell feeding direction, the image acquisition module 20 acquires the image of the tab of each laminated battery cell 73 at the preset feeding position.

**In** terms of type, the position sensor 27 may be a through-beam sensor, and the model thereof is not limited in this embodiment, as long as the anode tab 71 and the cathode tab 72 can be detected during feeding of laminates.

During feeding of the laminates which detected by the position sensor 27, when the anode tab 71 and the cathode tab 72 reach the preset feeding position, the position sensor 27 generates an image acquisition instruction and sends the image acquisition instruction to the image acquisition module 20, automatically implementing image acquisition of each tab that passes through the preset feeding position, thereby avoiding missed detection of the tab.

In one embodiment, as shown in FIG. 2 and FIG. 3, two image acquisition modules 20 are provided, and the two image acquisition modules 20 are respectively located at an end portion of the laminated battery cell 73 at which the anode tab 71 is arranged and an end portion of the laminated battery cell 73 at which the cathode tab 72 is arranged.

Specifically, the two image acquisition modules 20 are respectively a first image acquisition module 21 and a second image acquisition module 22. The first image acquisition module 21 is provided with a preset feeding position, that is, a position which the anode tab 71 passes through along the battery cell feeding direction, and thus the first image acquisition module 21 is configured to acquire an image of the anode tab 71 of each laminated battery cell 73. The second image acquisition module 22 is provided with a preset feeding position, that is, a position which the cathode tab 72 passes through along the battery cell feeding direction, and thus the second image acquisition module 22 is configured to acquire an image of the cathode tab 72 of each laminated battery cell 73. Correspondingly, two position sensors 27 are provided, where one position sensor 27 is arranged at the first image acquisition module 21, and the other position sensor 27 is arranged at the second image acquisition module 22. The first image acquisition module 21 and the second image acquisition module 22 are respectively configured to synchronously acquire an anode tab image and a cathode tab image after receiving the image acquisition instruction.

By such arrangement, images of the anode tab 71 and the cathode tab 72 can be acquired synchronously, thereby avoiding mixing of the anode tab image and the cathode tab image, so as not to affect the detection results. In addition, there may be any number of image acquisition modules 20. For example, one image acquisition module 20 is used to simultaneously acquire images of the anode tab and the cathode tab. For another example, one image acquisition module 20 is used to simultaneously acquire images of the anode tab and the cathode tab, and then two image acquisition modules 20 are respectively used to acquire the images of the anode tab and the cathode tab. For still another example, every four image acquisition modules 20 are configured as one group, and each group of image acquisition modules are respectively used to acquire images of the anode tab 71 and the cathode tab 72 at two sides of each laminated battery cell 73. The number of the image acquisition modules 20 is not limited in the present application, as long as the anode tab image and the cathode tab image can be acquired at the preset feeding position.

The image acquisition module 20 may be an RGB camera, an infrared camera, a depth-of-field camera, a point cloud camera, or the like, and a specific type thereof may be selected according to an actual situation of an image format used for defect detection. The specific type and model of the image acquisition module 20 are also not specifically limited in the present application.

In one embodiment, as shown in FIG. 2 and FIG. 3, the tab detection system further includes at least one backlight source, where the at least one backlight source is located at the preset feeding position, and the backlight source and the image acquisition module 20 are arranged opposite to each other at two sides of the battery cell 70. The at least one backlight source is configured to expose a tab along a direction from the tab to the image acquisition module 20 while the image acquisition module 20 is acquiring the image of the tab. Through the exposure of the anode tab 71 and the cathode tab 72, there is a gray difference between the anode tab region in the obtained anode tab image and a background image of the anode tab image, and there is a gray difference between the cathode tab region in the cathode tab image and a background image of the cathode tab image, which is conducive to tab defect detection.

Two backlight sources being provided is used as an example, where the backlight sources include a first backlight source 23 and a second backlight source 24 (not shown in the figure). The first backlight source 23 and the first image acquisition module 21 are arranged at an end portion of the laminated battery cell 73 at which the anode tab 71 is arranged, and the first backlight source 23 and the first image acquisition module 21 are arranged opposite to each other at two sides of the battery cell 70. While the first image acquisition module 21 is acquiring the image of the anode tab 71 at the preset feeding position, the first backlight source 23 exposes the anode tab 71. The second backlight source 24 and the second image acquisition module 22 are arranged at an end portion of the laminated battery cell 73 at which the cathode tab 72 is arranged, and the second backlight source 24 and the second image acquisition module 22 are arranged opposite to each other at two sides of the battery cell 70. While the second image acquisition module 22 is acquiring the image of the cathode tab 72 at the preset feeding position, the second backlight source 24 exposes the cathode tab 72.

The backlight sources are used to expose the tabs, which can highlight the tab regions in the tab images and facilitate division of tab regions in the tab images and background regions in the tab images in a subsequent defect detection process, thereby further improving the detection efficiency and accuracy.

In one embodiment, as shown in FIG. 3 and FIG. 4, the tab detection system further includes at least one front light source, where the at least one front light source is located at the preset feeding position, and the front light source and the image acquisition module are arranged at a same side of the battery cell. The at least one front light source is configured to expose a tab along a direction from the tab to the image acquisition module while the image acquisition module is acquiring the image of the tab.

Two front light sources being provided is used as an example, where the front light sources include a first front light source 25 and a second front light source 26 (not shown in the figure). The first front light source 25 and the first image acquisition module 21 are arranged at an end portion of the laminated battery cell 73 at which the anode tab 71 is arranged, and the first front light source 25 and the first image acquisition module 21 are arranged at a same side of the battery cell 70. While the first image acquisition module 21 is acquiring the image of the anode tab 71 at the preset feeding position, the first front light source 25 exposes the anode tab 71. The second front light source 26 and the second image acquisition module 22 are arranged at an end portion of the laminated battery cell 73 at which the cathode tab 72 is arranged, and the second front light source 26 and the second image acquisition module 22 are arranged at a same side of the battery cell 70. While the second image acquisition module 22 is acquiring the image of the cathode tab 72 at the preset feeding position, the second front light source 26 exposes the cathode tab 72.

The front light sources are used to expose the tabs, which likewise can highlight the tab regions in the tab images and also facilitate division of tab regions in the tab images and background regions in the tab images in a subsequent defect detection process, thereby further improving the detection efficiency and accuracy.

In one embodiment, as shown in FIG. 3 and FIG. 5, the tab detection system further includes at least one backlight source and at least one front light source. The at least one backlight source and the at least one front light source are located at the preset feeding position. The at least one front light source and the image acquisition module are arranged at a same side of the battery cell. The at least one backlight source and the image acquisition module are arranged opposite to each other at two sides of the battery cell. The at least one backlight source and the at least one front light source are configured to respectively expose the tabs at two sides of the battery cell while the image acquisition module is acquiring the images of the tabs.

Two backlight sources and two front light sources being provided is used as an example, where the backlight sources include a first backlight source 23 and a second backlight source 24, and the front light sources include a first front light source 25 and a second front light source 26. The first backlight source 23 and the first front light source 25 are arranged opposite to each other at an end portion of the laminated battery cell 73 at which the anode tab 71 is arranged, where the first front light source 25 and the first image acquisition module 21 are located at a same side of the battery cell 70, and the first backlight source 23 is located at the other side of the battery cell 70. While the first image acquisition module 21 is acquiring the image of the anode tab 71 at the preset feeding position, the first backlight source 23 and the first front light source 25 simultaneously expose the anode tab 71 The second backlight source 24 and the second front light source 26 are arranged at an end portion of the laminated battery cell 73 at which the cathode tab 72 is arranged, where the second front light source 26 and the second image acquisition module 22 are located at a same side of the battery cell 70, and the second backlight source 24 is located at the other side of the battery cell 70. While the second image acquisition module 22 is acquiring the image of the cathode tab 72 at the preset feeding position, the second backlight source 24 and the second front light source 26 simultaneously expose the cathode tab 72.

The backlight sources and the front light sources are used to simultaneously expose the tabs, which can highlight the tab regions in the tab images and facilitate division of tab regions in the tab images and background regions in the tab images in a subsequent defect detection process. In addition, the designed redundancy of a detection device is increased, so that when any one of the front light sources or backlight sources has a fault, the defect detection efficiency and accuracy can still be ensured.

In one embodiment, as shown in FIG. 1, the upper-level controller 50 is configured to identify an anode tab region and a cathode tab region in the image of the tab under a condition that the image of the tab has been acquired, and determine whether the anode tab and the cathode tab are folded and/or whether there is a residual material based on a comparison result between the anode tab region and a preset anode tab parameter as well as a comparison result between the cathode tab region and a preset cathode tab parameter.

The preset anode tab parameter and the preset cathode tab parameter are determined based on the model of the corresponding battery cell 70. For example, the tab of the battery cell 70 of this model should have a preset length and width, and when the tab is folded and/or there is a residual material on the tab, the length and width of the tab change, leading to a result that the size of the tab does not satisfy the length and width of the tab of the battery cell 70 of this model. For a process of a defect detection method, reference is made to step 710 to step 730, step 810 to step 840, step 910 to step 940, step 1010 to step 1030, and step 1110 to step 1130 hereinafter, which is not described again herein. The tab detection method can not only simultaneously detect the defects of tab folding and presence of a residual material, but also quantize a folding area and a residual material area so as to further adjust the process.

In one embodiment, the preset anode tab parameter includes a preset anode tab area. The upper-level controller 50 is configured to identify the anode tab image to obtain the anode tab region in the anode tab image and the background image of the anode tab image, obtain the anode tab area based on a gray value difference between the anode tab region and the background image of the anode tab image, and determine whether the anode tab is folded based on whether the anode tab area is less than the preset anode tab area. In this way, whether the anode tab is folded is determined and the folding area is quantized, thereby ensuring the accuracy of the detection results.

The preset anode tab area herein may be a preset value range, and it is determined that the anode tab has no defect as long as the detected anode tab area is within the value range of the preset anode tab area. Under a condition that the anode tab is folded, the anode tab area is less than the preset anode tab area, and the result that the detected anode tab area is less than the preset anode tab area is determined.

In one embodiment, the preset cathode tab parameter includes a preset cathode tab area. The upper-level controller 50 is further configured to identify the cathode tab image to obtain the cathode tab region, obtain the cathode tab area based on a gray value difference between the cathode tab region and a background image of the cathode tab image, and determine whether the cathode tab is folded based on whether the cathode tab area is less than the preset cathode tab area. In this way, whether the cathode tab is folded is determined and the folding area is quantized, thereby ensuring the accuracy of the detection results.

In one embodiment, the preset anode tab parameter includes a preset anode tab residual material area. The upper-level controller 50 is further configured to obtain an anode tab residual material region based on the anode tab region and the anode tab image, obtain an anode tab residual material area based on a gray value difference between the anode tab residual material region and the background image of the anode tab image, and determine whether there is a residual material on the anode tab based on whether the anode tab residual material area is less than the preset anode tab residual material area. In this way, on the basis of detecting whether the anode tab is folded, whether there is a residual material on the anode tab is further detected. Similarly, the anode tab residual material area is quantized for adjusting process parameters of a production line.

In one embodiment, the preset cathode tab parameter includes a preset cathode tab residual material area. The upper-level controller 50 is further configured to obtain a cathode tab residual material region based on the cathode tab region and the cathode tab image, obtain a cathode tab residual material area based on a gray value difference between the cathode tab residual material region and the background image of the cathode tab image, and determine whether there is a residual material on the cathode tab based on whether the cathode tab residual material area is less than the preset cathode tab residual material area. In this way, on the basis of detecting whether the cathode tab is folded, whether there is a residual material on the cathode tab is further detected. Similarly, the cathode tab residual material area is quantized for adjusting process parameters of a production line.

As described above, the upper-level controller 50 simultaneously detects two defects of tab folding and presence of a residual material, avoiding missed detection of tab defects, thereby preventing a situation that a battery cell produced with tabs having defects has potential safety hazards.

In one embodiment, as shown in FIG. 1, the upper-level controller 50 is further configured to send a tab defect detection result to the lower-level controller 60. The lower-level controller 60 is configured to generate a discarding instruction or a lamination instruction based on the defect detection result after receiving the defect detection result, thereby discarding the battery cells 70 in which the detected tabs have defects, and laminating the battery cells 70 with no defect.

In this way, the battery cells in which the tabs have defects are discarded, or the battery cells in which the tabs have no defect are laminated, thereby realizing intelligent control on the production line, and effectively ensuring the rhythm of the production line.

In one embodiment, as shown in FIG. 1, the upper-level controller 50 is configured to determine that the tab is folded when a tab image area is greater than or equal to a preset tab area, and/or determine that there is a residual material on the tab under a condition that a tab residual material area is greater than or equal to a preset tab residual material area, and send a detection result that the tab is folded and/or there is a residual material on the tab to the lower-level controller 60. The lower-level controller 60 is configured to generate a discarding instruction and send the discarding instruction to the discarding module 40 after receiving the result that the tab is folded and/or there is a residual material on the tab. The discarding module 40 is configured to discard the battery cells 70 with defects after receiving the discarding instruction.

In this way, when the upper-level controller 50 detects that the tab has a folding defect, the upper-level controller 50 has a real-time communication with the lower-level controller 60 to implement a discarding treatment, thereby realizing intelligent control on the production line, and effectively ensuring rhythm of the production line.

In one embodiment, as shown in FIG. 1, the upper-level controller 50 is configured to determine that the tab is not folded when a tab area is less than a preset tab area, and/or determine that there is no residual material on the tab under a condition that a tab residual material area is less than a preset tab residual material area, and send a detection result that the tab is not folded and/or there is no residual material on the tab to the lower-level controller 60. The lower-level controller 60 is configured to generate a lamination instruction and send the lamination instruction to the lamination module 30 after receiving the result that the tab is not folded and/or there is no residual material on the tab. The lamination module 30 is configured to laminate the battery cells 70 with no defect after receiving the lamination instruction.

In this way, when the upper-level controller 50 detects that the tab has a residual material defect, and the upper-level controller 50 has a real-time communication with the lower-level controller 60 to implement a discarding treatment. Thus, the upper-level controller 50 realizes detection of various tab defect types, also realizes intelligent control on the production line, and effectively ensures rhythm of the production line.

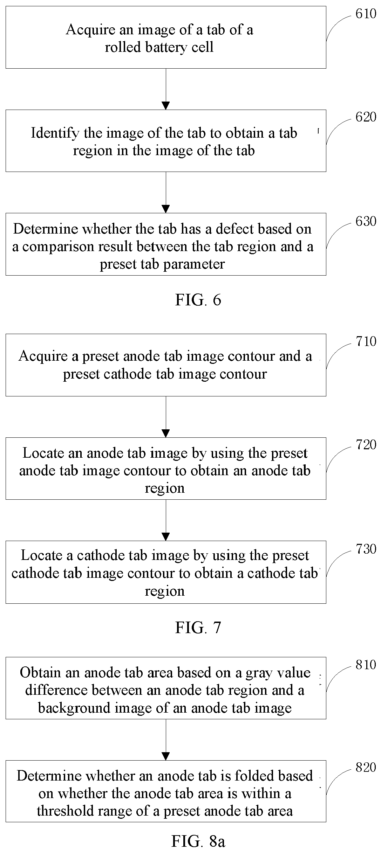

In one embodiment, FIG. 6 is a schematic flowchart of a tab detection method according to one embodiment of the present application, and the tab detection method can be applied to the foregoing tab detection system. As shown in FIG. 6, the tab detection method includes the following steps.

Step 610: Acquiring an image of a tab of a rolled battery cell.

Step 620: Identifying the image of the tab to obtain a tab region in the image of the tab.

Step 630: Determining whether the tab has a defect based on a comparison result between the tab region and a preset tab parameter.

Defect detection is implemented based on the image of the tab acquired in real time, so that whether the tab in the production line is folded is acquired in real time to avoid missed detection or mistaken detection existing in manual tab defect detection. In addition, after defect detection, the tab does not pass through a roller in the production line, so that the detection accuracy is ensured, and the absence of tabs with defects can ensure the safety of the battery cell, and the tabs with defects are discarded in time to ensure the rhythm of the production line.

In one embodiment, the image of the tab includes an anode tab image and a cathode tab image. The tab region includes an anode tab region and a cathode tab region. That is, the anode tab image corresponds to the anode tab region, and the cathode tab image corresponds to the cathode tab region. As shown in FIG. 7, the foregoing step 620 of identifying the image of the tab to obtain a tab region in the image of the tab includes the following steps.

Step 710: Acquiring a preset anode tab image contour and a preset cathode tab image contour.

Step 720: Locating the anode tab image by using the preset anode tab image contour to obtain the anode tab region.

Step 730: Locating the cathode tab image by using the preset cathode tab image contour to obtain the cathode tab region.

It should be noted that there is no sequential relationship between step 720 and step 730 in terms of time, and for cooperation of the first image acquisition module 21 and the second image acquisition module 22 to synchronously acquire the anode tab image and the cathode tab image, the anode tab region and the cathode tab region can be synchronously identified.

The anode tab region and the cathode tab region are identified by using the preset anode tab image contour and the preset cathode tab image contour, facilitating further quantization of tab folding or presence of a residual material on the tab.

In addition, the anode tab region is identified by using the preset anode tab contour and the cathode tab region is identified by using the preset cathode tab contour. Specifically, a tab region can be identified based on a gray value difference between a foreground image corresponding to the tab region in the tab image and the background image of the tab image, semantic information, and the like, which includes but are not limited to that, the anode tab region and the cathode tab region are identified by using various edge detection operators, semantic segmentation models, case segmentation models, and the like.

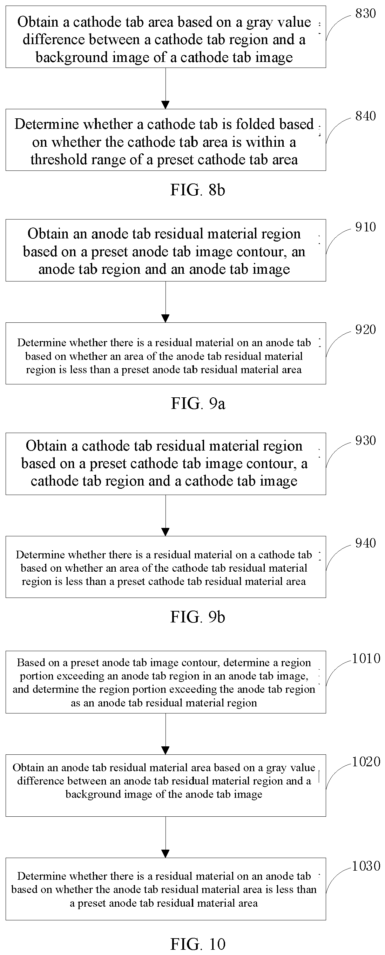

In one embodiment, the preset anode tab parameter includes a preset anode tab area, and the preset cathode tab parameter includes a preset cathode tab area. It can be learned that the preset anode tab area is an area corresponding to a standard anode tab of the battery cell of this model. A detection result that the anode tab area is below a threshold of the preset anode tab area indicates that the anode tab is an anode tab with no defect. The preset cathode tab area is an area corresponding to a standard cathode tab of the battery cell of this model. Similarly, A detection result that the cathode tab area is below a threshold of the preset cathode tab area indicates that the cathode tab is a cathode tab with no defect. As shown in FIG. 8a and FIG. 8b, the step 630 of determining whether the tab has a defect based on a comparison result between the tab region and a preset tab parameter includes the following steps.

As shown in FIG. 8a, for the anode tab:

Step 810: Obtaining an anode tab area based on a gray value difference between the anode tab region and the background image of the anode tab image.

Step 820: Determining whether the anode tab is folded based on whether the anode tab area is within a threshold range of the preset anode tab area.

In an example in which the anode tab 71 is rectangular, a length of a long side and a width of a short side of a standard anode tab can be determined based on the preset anode tab image contour, and the threshold range of the preset anode tab area can be determined based on the length and width of the preset anode tab image. Since the anode tab is exposed by using the front light source and/or the backlight source, the anode tab region (that is the foreground image) in the anode tab image is black, the background image of the anode tab image is white, and when the anode tab 71 is folded, the detected anode tab area is less than the threshold range of the preset anode tab area.

As shown in FIG. 8b, for the cathode tab:

Step 830: Obtaining a cathode tab area based on a gray value difference between the cathode tab region and the background image of the cathode tab image.

Step 840: Determining whether the cathode tab is folded based on whether the cathode tab area is within a threshold range of the preset cathode tab area.

Similarly, in an example in which the cathode tab 72 is rectangular, a length of a long side and a width of a short side of a standard cathode tab can be determined based on the preset cathode tab image contour, and the threshold range of the preset cathode tab area can be determined based on the length and width of the preset cathode tab image. Since the cathode tab is exposed by using the front light source and/or the backlight source, the cathode tab region (that is the foreground image) in the cathode tab image is black, the background image of the cathode tab image is white, and when the cathode tab 72 is folded, the detected cathode tab area is less than the threshold range of the preset cathode tab area.

It can be learned that according to the actual requirements of the production line, it is possible to detect only whether the anode tab is folded or whether the cathode tab is folded, and it is also possible to synchronously detect whether the anode tab is folded and whether the cathode tab is folded.

In one embodiment, the preset anode tab parameter includes a preset anode tab residual material area, and the preset cathode tab parameter includes a preset cathode tab residual material area. As shown in FIG. 9a and FIG. 9b, the step 630 of determining whether the tab has a defect based on a comparison result between the tab region and a preset tab parameter further includes the following steps.

As shown in FIG. 9a, for the anode tab:

Step 910: Obtaining an anode tab residual material region based on the preset anode tab image contour, the anode tab region and the anode tab image.

Step 920: Determining whether there is a residual material on the anode tab based on whether an area of the anode tab residual material region is less than the preset anode tab residual material area.

As shown in FIG. 9b, for the cathode tab:

Step 930: Obtaining a cathode tab residual material region based on the preset cathode tab image contour, the cathode tab region and the cathode tab image.

Step 940: Determining whether there is a residual material on the cathode tab based on whether an area of the cathode tab residual material region is less than the preset cathode tab residual material area.

The preset anode tab residual material area and the preset cathode tab residual material area can be determined based on the model and quality requirements of the battery cell. While whether the anode tab 71 and the cathode tab 72 are folded is detected, whether there are residual materials on the anode tab 71 and the cathode tab 72 can also be detected.

In one embodiment, as shown in FIG. 10, step 910 specifically includes the following steps.

Step 1010: Based on the preset anode tab image contour, determining a region portion exceeding the anode tab region in the anode tab image, and determining the region portion exceeding the anode tab region as the anode tab residual material region.

Correspondingly, step 920 specifically includes the following steps.

Step 1020: Obtaining an anode tab residual material area based on a gray value difference between the anode tab residual material region and the background image of the anode tab image.

Step 1030: Determining whether there is a residual material on the anode tab based on whether the anode tab residual material area is less than the preset anode tab residual material area.

Under a condition that the detected anode tab residual material area is less than the preset anode tab residual material area, it is determined that there is no residual material on the anode tab, that is, the anode tab has no residual material defect. Under a condition that the detected anode tab residual material area is greater than or equal to the preset anode tab residual material area, it is determined that there is a residual material on the anode tab, that is, the anode tab has a residual material defect.

On the basis of detecting whether the anode tab is folded, whether there is a residual material on the anode tab is further detected. Similarly, the anode tab residual material area is quantized for adjusting process parameters of the production line.

Still in an example in which the anode tab 71 is rectangular, a length of a long side and a width of a short side of a standard anode tab can be determined based on the preset anode tab image contour. Since the anode tab is exposed by using the front light source and/or the backlight source, the anode tab region (that is the foreground image) in the anode tab image is black, the background image of the anode tab image is white, and when it is detected that there is a black region outside the long side and/or the short side of the anode tab, the black region outside the long side and/or the short side in the anode tab image is the anode tab residual material region exceeding the anode tab region. When it is detected that there is a residual material on the anode tab 71, discarding treatment can be implemented in the production line.

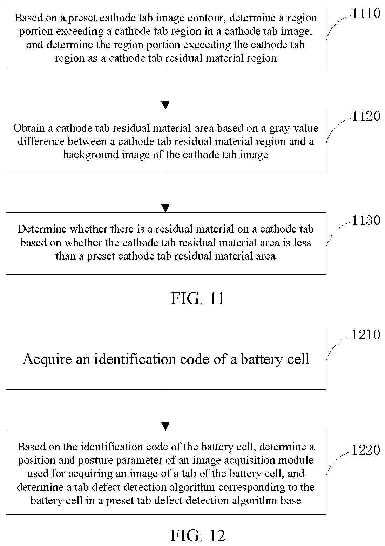

In one embodiment, as shown in FIG. 11, step 930 specifically includes the following steps.

Step 1110: Based on the preset cathode tab image contour, determining a region portion exceeding the cathode tab region in the cathode tab image, and determining the region portion exceeding the cathode tab region as the cathode tab residual material region.

Correspondingly, step 940 specifically includes the following steps.

Step 1120: Obtaining a cathode tab residual material area based on a gray value difference between the cathode tab residual material region and the background image of the cathode tab image.

Step 1130: Determining whether there is a residual material on the cathode tab based on whether the cathode tab residual material area is less than the preset cathode tab residual material area.

Under a condition that the detected cathode tab residual material area is less than the preset cathode tab residual material area, it is determined that there is no residual material on the cathode tab, that is, the cathode tab has no residual material defect. Under a condition that the detected cathode tab residual material area is greater than or equal to the preset cathode tab residual material area, it is determined that there is a residual material on the cathode tab, that is, the cathode tab has a residual material defect.

On the basis of detecting whether the cathode tab is folded, whether there is a residual material on the cathode tab is further detected. Similarly, the cathode tab residual material area is quantized for adjusting process parameters of the production line.

Still in an example in which the anode tab 71 is rectangular, a length of a long side and a width of a short side of a standard cathode tab can be determined based on the preset cathode tab image contour. Since the cathode tab is exposed by using the front light source and/or the backlight source, the cathode tab region (that is the foreground image) in the cathode tab image is black, the background image of the cathode tab image is white, and when it is detected that there is a black region outside the long side and/or the short side of the cathode tab, the black region outside the long side and/or the short side in the cathode tab image is the cathode tab residual material region exceeding the cathode tab region. When it is detected that there is a residual material on the cathode tab 72, discarding treatment can be implemented in the production line.

In addition, the preset anode tab residual material area and the preset cathode tab residual material area may be determined based on the model and quality requirements of the battery cell. For example, the preset anode tab residual material area and the preset cathode tab residual material area may be set as zero. As long as a residual material area is detected in the anode tab and a residual material area is detected in the cathode tab, the tabs have a residual material defect. For another example, a residual material error range allowable by the anode tab and the cathode tab can be used to determine an upper limit value of the preset anode tab residual material area and an upper limit value of the preset cathode tab residual material area. As long as the detected preset anode tab residual material area and preset cathode tab residual material area are both within this upper limit valve range, it is considered that the anode tab and the cathode tab have no residual material defect.

In one embodiment, FIG. 12 is a schematic flowchart of determining a tab detection algorithm according to one embodiment of the present application. As shown in FIG. 12, the method further includes the following steps.

Step 1210: Acquiring an identification code of the battery cell.

The identification code may be a product serial number (Serial Number, SN code).

Step 1220: Based on the identification code of the battery cell, determining a position and posture parameter of an image acquisition module used for acquiring the image of the tab of the battery cell, and determining a tab defect detection algorithm corresponding to the battery cell in a preset tab defect detection algorithm base.

It can be understood that since the position and posture of the image of the tab (that is, a distance between the image acquisition module 20 and the tab) acquired by the image acquisition modules 20 corresponding to the battery cells 70 of different models and the defect detection algorithms are all different, in the upper-level controller 50, position and posture parameters of the image acquisition modules 20 and corresponding defect detection algorithms are preset for the battery cells 70 of all models. During use, the tab detection system automatically determines and adjusts the positions of the image acquisition modules 20 and invokes the corresponding defect detection algorithms for defect identification based on image acquisition instructions generated by identification codes of the battery cells 70, thereby improving the efficiency of tab defect detection. In addition, the tabs of the battery cells 70 of various models can be detected by the same tab detection system.

It should be understood that although the steps of the flowchart in the foregoing embodiments are shown sequentially as indicated by the arrows, these steps are not necessarily performed sequentially in the order indicated by the arrows. Unless otherwise specified explicitly, execution of these steps is not limited to a strict order, and these steps may be executed in another order. Moreover, at least some of the steps of the flowchart in the foregoing embodiments may include a plurality of steps or a plurality of stages. These steps or stages are not necessarily performed at a same moment but may be performed at different moments, and these steps or stages are not necessarily performed sequentially either but may be performed in a sequential or alternating manner with at least some of other steps or steps or stages in other steps.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the foregoing embodiments or make equivalent replacements to some or all technical features thereof. However, these modifications or replacements do not cause the essence of the corresponding technical solutions to depart from the scope of the technical solutions of the embodiments of the present application, and shall all fall within the scope of the claims and specification of the present application. In particular, as long as there is no structural conflict, the various technical features mentioned in the embodiments can be combined in any manner. the present application is not limited to the specific embodiments disclosed in this specification but includes all technical solutions falling within the scope of the claims.

## Claims

1. A tab detection system, **characterized by** comprising:
an image acquisition module, configured to acquire an image of a tab of a battery cell rolled by a die cutting module, wherein the image acquisition module is located between the die cutting module and a lamination module; and
an upper-level controller, configured to determine whether the tab has a defect based on the image of the tab.

2. The tab detection system according to claim 1, **characterized in that** the system further comprises a position sensor, wherein the position sensor is configured to generate an image acquisition instruction and send the image acquisition instruction to the image acquisition module after detecting that the tab has reached a preset feeding position, wherein the preset feeding position is located between the die cutting module and the lamination module; and
the image acquisition module acquires the image of the tab after receiving the image acquisition instruction, to obtain the image of the tab and send the image to the upper-level controller.

3. The tab detection system according to claim 1, **characterized in that** two image acquisition modules are provided, wherein the two image acquisition modules are respectively located at an end portion of the battery cell at which an anode tab is arranged and an end portion of the battery cell at which a cathode tab is arranged; and
the two image acquisition modules are respectively configured to synchronously acquire an anode tab image and a cathode tab image after receiving the image acquisition instruction.

4. The tab detection system according to claim 1, **characterized in that** the system further comprises at least one backlight source, wherein the at least one backlight source is located at the preset feeding position, and the backlight source and the image acquisition module are arranged opposite to each other at two sides of the battery cell; and
the at least one backlight source is configured to expose the tab along a direction from the tab to the image acquisition module while the image acquisition module is acquiring the image of the tab.

5. The tab detection system according to claim 1, **characterized in that** the system further comprises at least one front light source, wherein the at least one front light source is located at the preset feeding position, and the front light source and the image acquisition module are arranged at a same side of the battery cell; and
the at least one front light source is configured to expose the tab along a direction from the image acquisition module to the tab while the image acquisition module is acquiring the image of the tab.

6. The tab detection system according to claim 1, **characterized in that** the system further comprises at least one backlight source and at least one front light source, wherein the at least one backlight source and the at least one front light source are located at the preset feeding position, the at least one front light source and the image acquisition module are arranged at a same side of the battery cell, and the at least one backlight source and the image acquisition module are arranged opposite to each other at two sides of the battery cell; and
the at least one backlight source and the at least one front light source are configured to respectively expose the tab at two sides of the battery cell while the image acquisition module is acquiring the image of the tab.

7. The tab detection system according to any one of claims 1 to 6, **characterized in that** the upper-level controller is configured to identify an anode tab region and a cathode tab region in the image of the tab under a condition that the image of the tab has been acquired, and determine whether the anode tab and the cathode tab are folded and/or whether there is a residual material based on a comparison result between the anode tab region and a preset anode tab parameter as well as a comparison result between the cathode tab region and a preset cathode tab parameter.

8. The tab detection system according to claim 7, **characterized in that** the preset anode tab parameter comprises a preset anode tab area; and
the upper-level controller is further configured to identify the anode tab image to obtain the anode tab region, obtain the anode tab area based on a gray value difference between the anode tab region and a background image of the anode tab image, and determine whether the anode tab is folded based on whether the anode tab area is less than the preset anode tab area.

9. The tab detection system according to claim 7, **characterized in that** the preset cathode tab parameter comprises a preset cathode tab area; and
the upper-level controller is further configured to identify the cathode tab image to obtain the cathode tab region, obtain the cathode tab area based on a gray value difference between the cathode tab region and a background image of the cathode tab image, and determine whether the cathode tab is folded based on whether the cathode tab area is less than the preset cathode tab area.

10. The tab detection system according to claim 7, **characterized in that** the preset anode tab parameter comprises a preset anode tab residual material area; and
the upper-level controller is further configured to obtain an anode tab residual material region based on the anode tab region and the anode tab image, obtain an anode tab residual material area based on a gray value difference between the anode tab residual material region and a background image of the anode tab image, and determine whether there is a residual material on the anode tab based on whether the anode tab residual material area is less than the preset anode tab residual material area.

11. The tab detection system according to claim 7, **characterized in that** the preset cathode tab parameter comprises a preset cathode tab residual material area; and
the upper-level controller is further configured to obtain a cathode tab residual material region based on the cathode tab region and the cathode tab image, obtain a cathode tab residual material area based on a gray value difference between the cathode tab residual material region and a background image of the cathode tab image, and determine whether there is a residual material on the cathode tab based on whether the cathode tab residual material area is less than the preset cathode tab residual material area.

12. The tab detection system according to claim 1, **characterized in that** the system further comprises a lower-level controller, wherein
the upper-level controller is further configured to send a defect detection result of the tab to the lower-level controller; and
the lower-level controller is configured to generate a discarding instruction or a lamination instruction for the battery cell based on the defect detection result under a condition that the defect detection result has been received.

13. The tab detection system according to claim 12, **characterized in that** the system further comprises a discarding module; wherein
the upper-level controller is configured to determine that the tab is folded when a tab image area is less than a preset tab area, and/or determine that there is a residual material on the tab under a condition that a tab residual material area is greater than or equal to a preset tab residual material area, and send a detection result that the tab is folded and/or there is a residual material on the tab to the lower-level controller;
the lower-level controller is configured to generate a discarding instruction and send the discarding instruction to the discarding module after receiving the result that the tab is folded and/or there is a residual material on the tab; and
the discarding module is configured to discard the battery cell after receiving the discarding instruction.

14. The tab detection system according to claim 12, **characterized in that** the upper-level controller is configured to determine that the tab is not folded when a tab area is greater than or equal to a preset tab area, and/or determine that there is no residual material on the tab under a condition that a tab residual material area is less than a preset tab residual material area, and send a detection result that the tab is not folded and/or there is no residual material on the tab to the lower-level controller;
the lower-level controller is configured to generate a lamination instruction and send the lamination instruction to the lamination module after receiving the result that the tab is not folded and/or there is no residual material on the tab; and
the lamination module is configured to implement a lamination treatment for the battery cell after receiving the lamination instruction.

15. A tab detection method, **characterized by** comprising:
acquiring an image of a tab of a rolled battery cell;
identifying the image of the tab to obtain a tab region in the image of the tab; and
determining whether the tab has a defect based on a comparison result between the tab region and a preset tab parameter.

16. The tab detection method according to claim 15, **characterized in that** the image of the tab comprises an anode tab image and a cathode tab image, and the tab region comprises an anode tab region and a cathode tab region; wherein the identifying the image of the tab to obtain a tab region in the image of the tab comprises:
acquiring a preset anode tab image contour and a preset cathode tab image contour;
locating the anode tab image by using the preset anode tab image contour to obtain the anode tab region; and
locating the cathode tab image by using the preset cathode tab image contour to obtain the cathode tab region.

17. The tab detection method according to claim 16, **characterized in that** the preset tab parameter comprises a preset anode tab area and a preset cathode tab area; wherein the determining whether the tab has a defect based on a comparison result between the tab region and a preset tab parameter comprises:
obtaining the anode tab area based on a gray value difference between the anode tab region and a background image of the anode tab image;
determining whether the anode tab is folded based on whether the anode tab area is less than the preset anode tab area; and/or
obtaining the cathode tab area based on a gray value difference between the cathode tab region and a background image of the cathode tab image; and
determining whether the cathode tab is folded based on whether the cathode tab area is less than the preset cathode tab area.

18. The tab detection method according to claim 16, **characterized in that** the preset tab parameter comprises a preset anode tab residual material area; wherein the determining whether the tab has a defect based on the tab region and a preset tab parameter further comprises:
obtaining the anode tab residual material region based on the preset anode tab image contour, the anode tab region and the anode tab image; and
determining whether there is a residual material on the anode tab based on whether an area of the anode tab residual material region is less than the preset anode tab residual material area.

19. The tab detection method according to claim 16, **characterized in that** the preset tab parameter comprises a preset cathode tab residual material area; wherein the determining whether the tab has a defect based on a comparison result between the tab region and a preset tab parameter further comprises:
obtaining the cathode tab residual material region based on the preset cathode tab image contour, the cathode tab region and the cathode tab image; and
determining whether there is a residual material on the cathode tab based on whether an area of the cathode tab residual material region is less than the preset cathode tab residual material area.

20. The tab detection method according to any one of claims 15 to 19, **characterized in that** the method further comprises:
acquiring an identification code of the battery cell;
based on the identification code of the battery cell, determining a position and posture parameter of an image acquisition module used for acquiring the image of the tab of the battery cell, and determining a tab defect detection algorithm corresponding to the battery cell in a preset tab defect detection algorithm base.
